# EUROPEAN PATENT SPECIFICATION

(11) **EP 4 197 234 B1**
(45) Date of publication and mention of the grant of the patent: **10.09.2025**
(21) Application number: 20756840.3
(22) Date of filing: 12.08.2020
(51) Int. Cl.: H04W 48/04, H04W 12/10, H04W 48/12

(54) **LOCATION BASED NETWORK ACCESS MANAGEMENT**
STANDORTBASIERTE NETZWERKZUGANGSVERWALTUNG
GESTION D'ACCÈS AU RÉSEAU BASÉE SUR LA LOCALISATION

(43) Date of publication of application: 21.06.2023
(73) Proprietor: Nokia Technologies Oy, 02610 Espoo (FI)
(72) Inventor: WON, Sung Hwan, Flower Mound, Texas 75028 (US); LEIS, Peter, 82377 Penzberg (DE); LIEBHART, Rainer, 81476 Munich (DE)
(74) Representative: Nokia EPO representatives
(86) International application number: PCT/EP2020/072628
(87) International publication number: WO 2022/033675

(56) References cited:
- WO-A1-2019/160390
- US-A1- 2005 107 082
- US-A1- 2020 413 241
- NOKIA ET AL: "Handling of a UE not allowed to access SNPN services via a PLMN by subscription with 5GMM cause value #72", vol. CT WG1, no. Electronic meeting; 20200416 - 20200424, 19 June 2020 (2020-06-19), XP051902792, Retrieved from the Internet <URL:https://ftp.3gpp.org/tsg_ct/TSG_CT/TSGC_88e/Docs/CP-201138.zip 24501_CR2151_(Rel-16)_C1-202406.docx> [retrieved on 20200619]

## Description

### Field

Various example embodiments relate to location based network access management. More specifically, various example embodiments exemplarily relate to measures (including methods, apparatuses and computer program products) for realizing location based network access management.

### Background

The present specification generally relates to network selection, and thus, network access control, in cross-border scenarios.

In cross-border scenarios in which a mobile terminal located in one country may (attempt to) access mobile networks of other countries, several challenges are raised.

One example posing such cross-border scenarios is utilization of satellite access in Third Generation Partnership Project (3GPP) 5G.

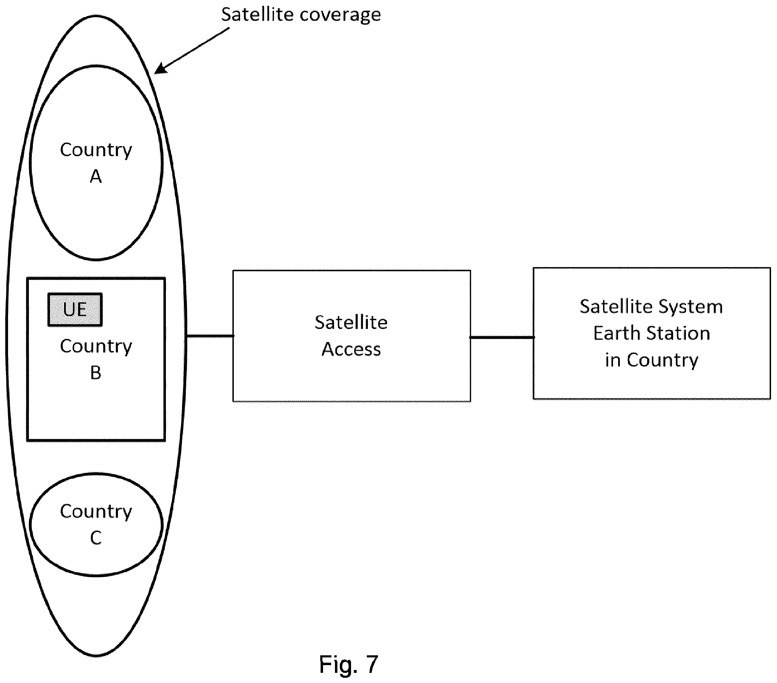

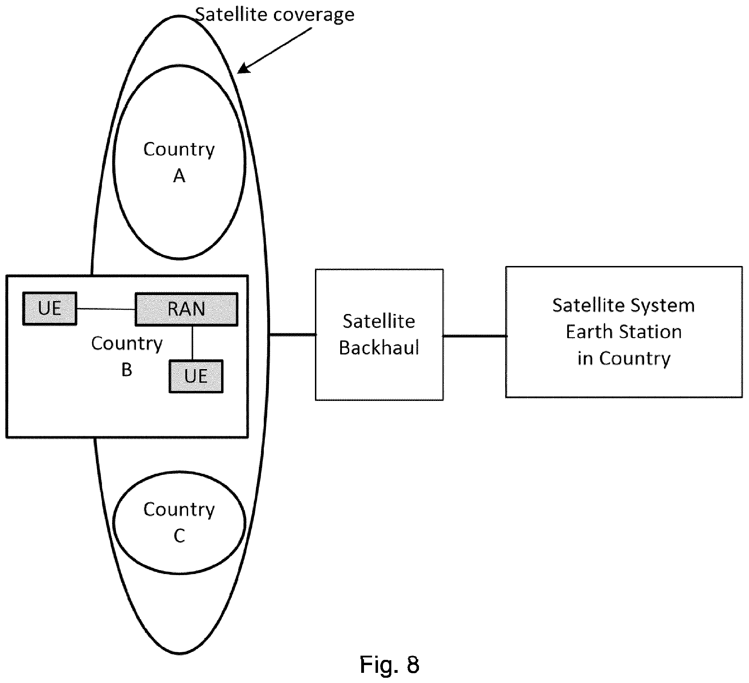

Figures 7 and 8 show schematic diagrams of examples of a system environment utilizing satellite access, respectively.

In particular, Figure 7 illustrates a scenario of utilizing satellite access with satellite beams overlapping several countries.

Further, Figure 8 illustrates a scenario of utilizing a satellite backhaul with satellite beams overlapping several countries.

Telecommunication regulations of the country in which a user equipment (UE) is physically located can be expected to be applicable to that UE's telecommunications operator. Some relaxations in regulations may be unavoidable, but the fewer relaxations that need to be negotiated, the better for speedy deployment.

System complexities can be expected when a satellite's coverage crosses country borders and/or the UE's communications use terrestrial equipment (e.g. earth stations) that are in a different country to the UE, as is illustrated in Figure 7, in which the UE itself utilizes the satellite's coverage.

A similar situation may arise with the use of satellite backhaul. A satellite transport would in this case interconnect a RAN with a 5CN. The satellite's coverage could overlap more than one country, as is illustrated in Figure 8, in which a radio access network (RAN) to which the UE is connected utilizes the satellite's coverage for backhauling.

For both satellite access and satellite backhaul situations, it is generally foreseen to address some points in relation to these challenges as follows.

These challenges are summarizes below.

Namely, on the one hand, it was to be clarified how to ensure, when required, that the UE is using a core network of the country in which the UE is physically located.

Further, on the other hand, it was to be clarified how to select a core network when the UE is in an aeronautical or maritime location. Still further, it was to be clarified how to enable per-country, UE specific prohibition of satellite access, if the satellite system is using a same mobile country code and mobile network code (MCC+MNC) in multiple countries. Still further, it was to be clarified how to route an emergency call to the correct public safety answering point (PSAP). Still further, it was to be clarified how to handle lawful interception (LI). Still further, it was to be clarified how to address a public warning system (PWS). Finally, it was to be clarified how to handle charging and tariff notifications.

As mentioned above, to address some points in relation to these challenges, it is generally foreseen that if a UE is attempting to register to a public mobile land network (PLMN) that it is not allowed to access in the present UE location (e.g. PLMN of different country than the present UE location), an access and mobility management function (AMF) responds with REGISTRATION REJECT, including a suitable cause value to tell the UE that the selected PLMN is not allowed in the present UE location. Based on the UE location, the AMF may also include a hint of a country code (MCC, mobile country code) or a list of PLMN codes (MCC+MNC) or a list of PLMN and radio access technology (RAT) codes (MCC+MNC+RAT).

When evaluating whether the UE is allowed to access the selected PLMN, the AMF may take into account that the UE is allowed to access 90x satellite MCC in multiple countries.

In order to ensure the call being routed to a PSAP of the country of the UE location, the AMF shall take the same approach if the UE is requesting emergency registration in a country that is different from the UE location.

After REGISTRATION REJECT indicating that the PLMN is not allowed in the present UE location, the UE in automatic PLMN selection mode may attempt to select another PLMN, using the hint received from the rejecting PLMN (received from the rejecting AMF regarding the not allowed PLMN), and the UE may memorize the PLMN that is not allowed in the present county for as long as the UE remains in that country. A UE in manual PLMN selection mode may behave as normal, i.e., may remain camping on cell in limited service state after REGISTRATION REJECT. If necessary, a new cause value telling the user the reason for no service might be added.

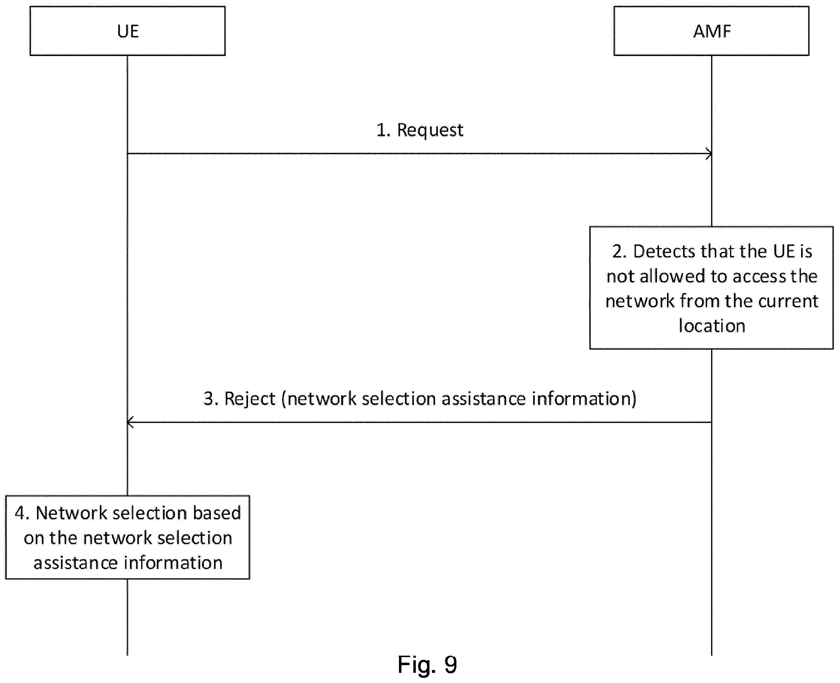

Figure 9 shows a schematic diagram of signaling sequences.

In particular, Figure 9 illustrates a basic call flow following the above-outlined general way foreseen to address some points in relation to the above-explained challenges.

In step 1 of Figure 9, a UE transmits a request (e.g. registration request) towards an AMF.

In step 2 of Figure 9, the AMF detects that the UE is not allowed to access the network (corresponding to the registration request) from the current location of the UE.

In step 3 of Figure 9, the AMF transmits a reject message to the UE, wherein the reject message may include network selection assistance information.

In step 4 of Figure 9, the UE performs a network selection based on the received network selection assistance information.

The network selection assistance information refers to a country code (MCC), a list of PLMN codes (MCC+MNC), or a list of PLMN+RAT codes (MCC+MNC+RAT) sent from the AMF to the UE as described e.g. in 3GPP TR 23.737.

In principle, the network selection procedure in the UE may also be steered by other information sent from the network to the UE as part of a registration reject, a deregistration request or a service reject message. In addition, the above principles are not limited to the case of satellite coverage exemplified above.

The above-outlined foreseen approaches are rather general and provide a basic framework.

However, the above-outlined foreseen approaches do not provide any implementation details of how to provide for efficient network selection and network access control in cross-border scenarios.

Hence, the problem arises that measures allowing efficient network selection and network access control in cross-border scenarios is not provided for yet. Accordingly, the above-outlined challenges entailed by such scenarios are not yet tackled.

Hence, there is a need to provide for a location based network access management tackled the above-outlined challenges entailed by such scenarios.

NOKIA ET AL: "Handling of a UE not allowed to access SNPN services via a PLMN by subscription with 5GMM cause value #72",3GPP DRAFT; CP-201138 discloses that the AMF sends a REGISTRATION REJECT message to the UE including an appropriate 5GMM cause value. Cause #13 Roaming not allowed in this tracking area is one of the possible causes included in the REJECT message. When this cause is included, three validity conditions are checked, namely integrity protection of the reject message, 3GPP and SNPN access. In any case, the UE performs a PLMN selection.

### Summary

Various example embodiments aim at addressing at least part of the above issues and/or problems and drawbacks.

Various aspects of example embodiments are set out in the appended claims.

According to an example aspect, there is provided a method performed by a mobile terminal according to claim 1.

According to an example aspect, there is provided a method performed by an access and mobility management function according to claim 8.

According to an example aspect, there is provided a mobile terminal according to claim 14.

According to an example aspect, there is provided an access and mobility management function according to claim 15.

Any one of the above aspects provide implementation details of how to provide for efficient network selection and network access control in cross-border scenarios to thereby solve at least part of the problems and drawbacks identified in relation to the prior art.

By way of example embodiments, there is provided location based network access management. More specifically, by way of example embodiments, there are provided measures and mechanisms for realizing location based network access management.

Thus, improvement is achieved by methods and apparatuses enabling/realizing location based network access management.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a schematic diagram of a procedure according to example embodiments,
Figure 6 is a schematic diagram of a procedure according to example embodiments,
Figure 7 shows a schematic diagram of an example of a system environment utilizing satellite access,
Figure 8 shows a schematic diagram of an example of a system environment utilizing satellite access,
Figure 9 shows a schematic diagram of signaling sequences,
Figure 10 shows a schematic diagram of signaling sequences according to example embodiments,
Figure 11 shows a schematic diagram of signaling sequences according to example embodiments,
Figure 12 shows a schematic diagram of signaling sequences according to example embodiments,
Figure 13 shows a schematic diagram of signaling sequences according to example embodiments,
Figure 14 shows a schematic diagram of signaling sequences according to example embodiments,
Figure 15 shows a schematic diagram of signaling sequences according to example embodiments,
Figure 16 shows a schematic diagram of signaling sequences according to example embodiments, and
Figure 17 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

In particular, the present disclosure and its embodiments may be applicable in any network scenario in which network elements may not be allowed to access networks for some reason (in particular the location of the respective network element).

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) location based network access management.

Example embodiments provide details regarding which messages can be used to indicate that the UE is not allowed to access the PLMN from the present location.

Further, example embodiments provide details regarding UE behaviors upon receiving the message (indicating that the UE is not allowed to access the PLMN from the present location) from the network.

Still further, example embodiments provide details regarding the behavior of a UE not supporting network selection assistance information.

Furthermore, example embodiments provide details regarding keeping the network selection assistance information in the UE.

Moreover, example embodiments provide details regarding handling a message including network selection assistance information that is not integrity protected.

Finally, example embodiments provide details regarding prioritization of PLMN and RAT combinations aligned/matched with the UE's location (UE location information) during manual network selection.

Principles according to the present disclosure are explained below.

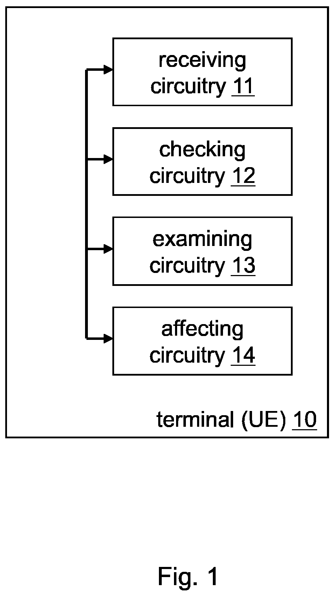

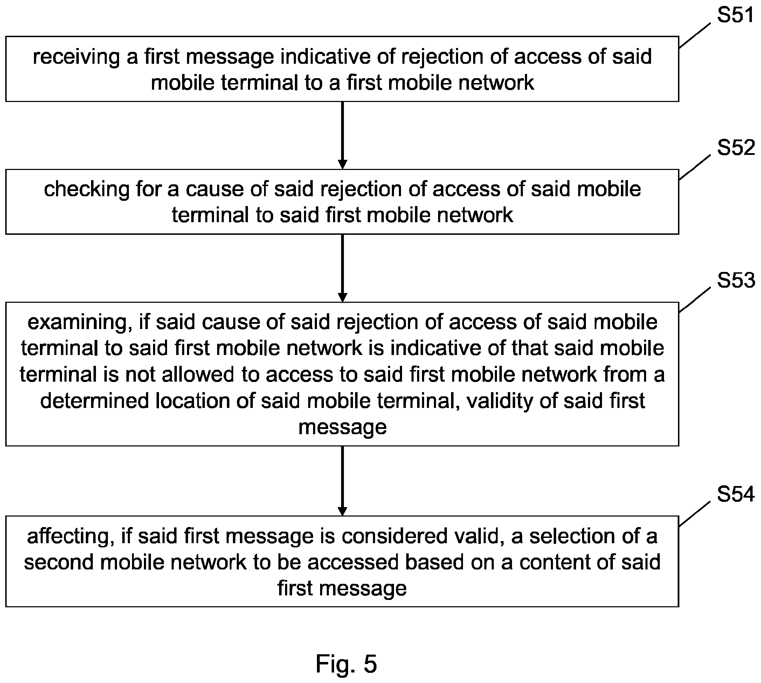

Figure 1 is a block diagram illustrating an apparatus according to example embodiments. The apparatus may be a terminal 10 such as a user equipment UE comprising a receiving circuitry 11, a checking circuitry 12, an examining circuitry 13, and an affecting circuitry 14. The receiving circuitry 11 receives a first message indicative of rejection of access of said mobile terminal to a first mobile network. The checking circuitry 12 checks for a cause of said rejection of access of said mobile terminal to said first mobile network. The examining circuitry 13 examines, if said cause of said rejection of access of said mobile terminal to said first mobile network is indicative of that said mobile terminal is not allowed to access to said first mobile network from a determined location of said mobile terminal, validity of said first message. The affecting circuitry 14 affects, if said first message is considered valid, a selection of a second mobile network to be accessed based on a content of said first message. Figure 5 is a schematic diagram of a procedure according to example embodiments. The apparatus according to Figure 1 may perform the method of Figure 5 but is not limited to this method. The method of Figure 5 may be performed by the apparatus of Figure 1 but is not limited to being performed by this apparatus.

As shown in Figure 5, a procedure according to example embodiments comprises an operation of receiving (S51) a first message indicative of rejection of access of said mobile terminal to a first mobile network, an operation of checking (S52) for a cause of said rejection of access of said mobile terminal to said first mobile network, an operation of examining (S53), if said cause of said rejection of access of said mobile terminal to said first mobile network is indicative of that said mobile terminal is not allowed to access to said first mobile network from a determined location of said mobile terminal, validity of said first message, and an operation of affecting (S54), if said first message is considered valid, a selection of a second mobile network to be accessed based on a content of said first message.

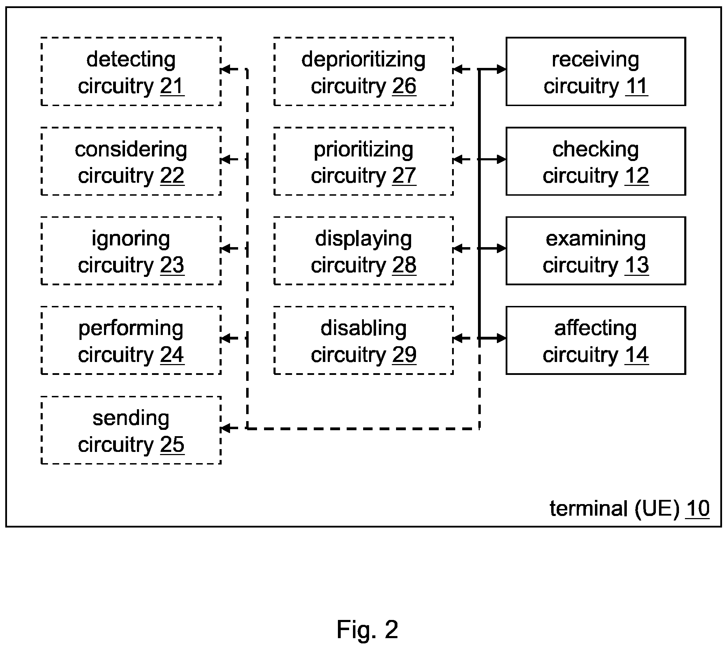

Figure 2 is a block diagram illustrating an apparatus according to example embodiments. In particular, Figure 2 illustrates a variation of the apparatus shown in Figure 1. The apparatus according to Figure 2 may thus further comprise a detecting circuitry 21, a considering circuitry 22, an ignoring circuitry 23, a performing circuitry 24, a sending circuitry 25, a deprioritizing circuitry 26, a prioritizing circuitry 27, a displaying circuitry 28, and/or a disabling circuitry 29.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 5, exemplary additional operations and exemplary details of the examining operation (S53) are given, which are inherently independent from each other as such. According to such variation, such exemplary examining operation (S53) according to example embodiments may comprise an operation of detecting whether said first message is integrity protected. Further, an exemplary method according to example embodiments may comprise, if said first message is not integrity protected, an operation of considering said first message as invalid, and an operation of ignoring said first message.

According to a variation of the procedure shown in Figure 5, exemplary additional operations and exemplary details of the examining operation (S53) are given, which are inherently independent from each other as such. According to such variation, such exemplary examining operation (S53) according to example embodiments may comprise an operation of detecting whether said first message is received via a Third-Generation-Partnership-Project access. Further, an exemplary method according to example embodiments may comprise, if said first message is not received via a Third-Generation-Partnership-Project access, an operation of considering said first message as invalid, and an operation of performing abnormal case handling for said first message.

According to a variation of the procedure shown in Figure 5, exemplary additional operations and exemplary details of the examining operation (S53) are given, which are inherently independent from each other as such. According to such variation, such exemplary examining operation (S53) according to example embodiments may comprise an operation of detecting whether said first message is received via standalone non-public network. Further, an exemplary method according to example embodiments may comprise, if said first message is received via a standalone non-public network, an operation of considering said first message as invalid, and an operation of performing abnormal case handling for said first message.

According to a variation of the procedure shown in Figure 5, exemplary additional operations are given, which are inherently independent from each other as such. According to such variation, an exemplary method according to example embodiments may comprise an operation of sending a second message including information implying a present location of said mobile terminal and/or an indication whether said mobile terminal supports mobile network selection based on information provided by an access and mobility management function entity. Here, said first message is a response to said second message.

According to further example embodiments, said first message is a registration reject message, a service reject message, or a deregistration request message.

According to further example embodiments, said second message is a registration request message or a service request message.

According to further example embodiments, said information implying a present location of said mobile terminal includes at least one of
- coordinates detected utilizing a global navigation satellite system,
- a cell identifier of a radio cell said mobile terminal is connected to, and
- a list of received mobile network identifiers, each respective mobile network identifier being associated with an indication of a respective signal strength detected when receiving said respective received mobile network identifier.

According to a variation of the procedure shown in Figure 5, exemplary details of the affecting operation (S54) are given, which are inherently independent from each other as such. Such exemplary affecting operation (S54) according to example embodiments may comprise an operation of deprioritizing, in candidate mobile networks, said first mobile network or a mobile network of a country to which said first mobile network belongs, and an operation of selecting said second mobile network from said candidate mobile networks.

According to a variation of the procedure shown in Figure 5, exemplary details of the affecting operation (S54) are given, which are inherently independent from each other as such. Here, said first message includes network selection assistance information. Such exemplary affecting operation (S54) according to example embodiments may comprise an operation of considering said network selection assistance information as a basis for said selection.

According to a variation of the procedure shown in Figure 5, exemplary details of the considering operation are given, which are inherently independent from each other as such. Here, said network selection assistance information comprises information on mobile networks to which said mobile terminal is not allowed to access from said determined location of said mobile terminal. Such exemplary considering operation according to example embodiments may comprise an operation of deprioritizing, in candidate mobile networks, said mobile networks to which said mobile terminal is not allowed to access from said determined location of said mobile terminal, and an operation of selecting said second mobile network from said candidate mobile networks.

According to a variation of the procedure shown in Figure 5, exemplary details of the considering operation are given, which are inherently independent from each other as such. Here, said network selection assistance information comprises information on mobile networks to which said mobile terminal is allowed to access from said determined location of said mobile terminal. Such exemplary considering operation according to example embodiments may comprise an operation of prioritizing, in candidate mobile networks, said mobile networks to which said mobile terminal is allowed to access from said determined location of said mobile terminal, and an operation of selecting said second mobile network from said candidate mobile networks.

According to a variation of the procedure shown in Figure 5, exemplary details of the deprioritizing operation are given, which are inherently independent from each other as such. Such exemplary deprioritizing operation according to example embodiments may comprise an operation of displaying each of said mobile networks to which said mobile terminal is not allowed to access from said determined location of said mobile terminal associated with an indication that said mobile terminal is not allowed to access from said determined location of said mobile terminal.

According to a variation of the procedure shown in Figure 5, exemplary details of the prioritizing operation are given, which are inherently independent from each other as such. Such exemplary prioritizing operation according to example embodiments may comprise an operation of displaying each of said mobile networks to which said mobile terminal is not allowed to access from said determined location of said mobile terminal associated with an indication that said mobile terminal is allowed to access from said determined location of said mobile terminal.

According to a variation of the procedure shown in Figure 5, exemplary additional operations are given, which are inherently independent from each other as such. According to such variation, an exemplary method according to example embodiments may comprise an operation of disabling said network selection assistance information, if a predetermined network selection assistance information endurance condition is satisfied.

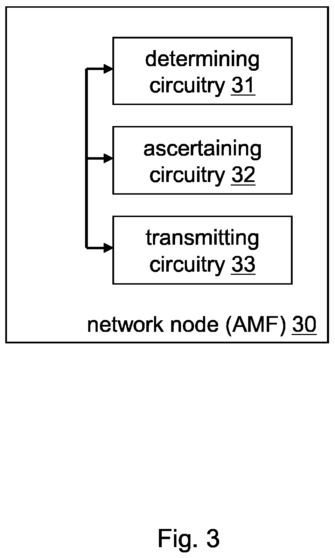

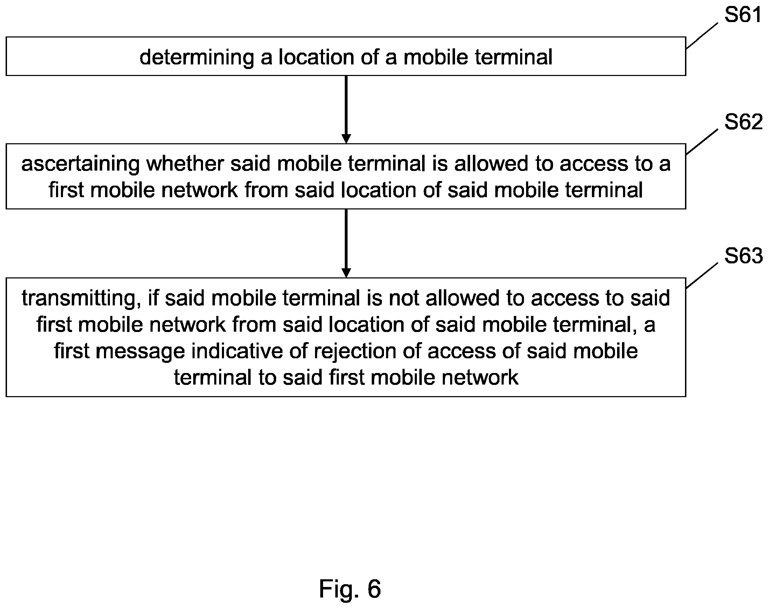

Figure 3 is a block diagram illustrating an apparatus according to example embodiments. The apparatus may be a network node 30 such as an access and mobility management function entity AMF comprising a determining circuitry 31, an ascertaining circuitry 32, and a transmitting circuitry 33. The determining circuitry 31 determines a location of a mobile terminal. The ascertaining circuitry 32 ascertains whether said mobile terminal is allowed to access to a first mobile network from said location of said mobile terminal. The transmitting circuitry 33 transmits, if said mobile terminal is not allowed to access to said first mobile network from said location of said mobile terminal, a first message indicative of rejection of access of said mobile terminal to said first mobile network. Figure 6 is a schematic diagram of a procedure according to example embodiments. The apparatus according to Figure 3 may perform the method of Figure 6 but is not limited to this method. The method of Figure 6 may be performed by the apparatus of Figure 3 but is not limited to being performed by this apparatus.

As shown in Figure 6, a procedure according to example embodiments comprises an operation of determining (S61) a location of a mobile terminal, an operation of ascertaining (S62) whether said mobile terminal is allowed to access to a first mobile network from said location of said mobile terminal, and an operation of transmitting (S63), if said mobile terminal is not allowed to access to said first mobile network from said location of said mobile terminal, a first message indicative of rejection of access of said mobile terminal to said first mobile network.

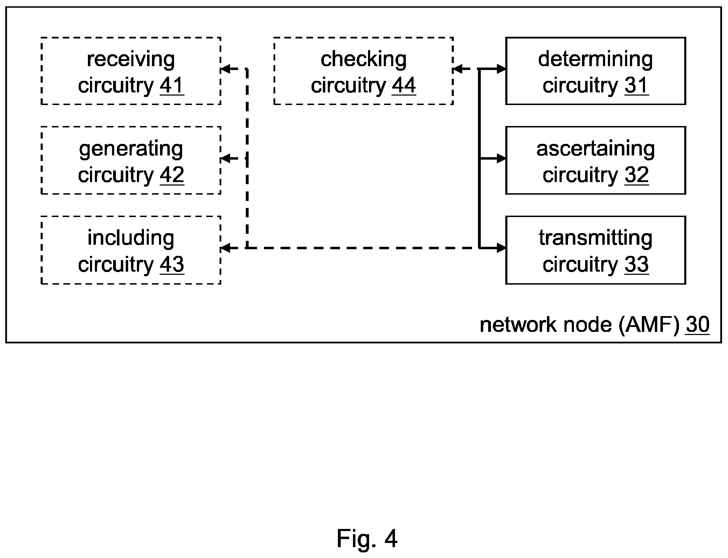

Figure 4 is a block diagram illustrating an apparatus according to example embodiments. In particular, Figure 4 illustrates a variation of the apparatus shown in Figure 3. The apparatus according to Figure 4 may thus further comprise a receiving circuitry 41, a generating circuitry 42, an including circuitry 43, and/or a checking circuitry 44.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to a variation of the procedure shown in Figure 6, exemplary additional operations are given, which are inherently independent from each other as such. According to such variation, an exemplary method according to example embodiments may comprise an operation of receiving, from said mobile terminal, a second message including information implying a present location of said mobile terminal, and an operation of determining said location based on said information implying said present location of said mobile terminal. Here, said first message is a response to said second message.

According to further example embodiments, said information implying a present location of said mobile terminal includes at least one of
- coordinates detected utilizing a global navigation satellite system,
- a cell identifier of a radio cell said mobile terminal is connected to, and
- a list of mobile network identifiers received by said mobile terminal, each respective mobile network identifier being associated with an indication of a respective signal strength detected when receiving said respective received mobile network identifier.

According to a variation of the procedure shown in Figure 6, exemplary additional operations are given, which are inherently independent from each other as such. According to such variation, an exemplary method according to example embodiments may comprise an operation of generating network selection assistance information based on said information implying a present location of said mobile terminal, and an operation of including said selection assistance information into said first message.

According to further example embodiments, said network selection assistance information comprises information on mobile networks to which said mobile terminal is not allowed to access from said determined location of said mobile terminal.

Alternatively, according to further example embodiments, said network selection assistance information comprises information on mobile networks to which said mobile terminal is allowed to access from said determined location of said mobile terminal.

According to a variation of the procedure shown in Figure 6, exemplary additional operations are given, which are inherently independent from each other as such. According to such variation, an exemplary method according to example embodiments may comprise an operation of checking whether said second message includes an indication that said mobile terminal supports mobile network selection based on information provided by said access and mobility management function entity, an operation of including, if said second message includes said indication that said mobile terminal supports mobile network selection based on information provided by an access and mobility management function entity, a cause of said rejection of access of said mobile terminal to said first mobile network to said first message, wherein said cause of said rejection of access of said mobile terminal to said first mobile network is indicative of that said mobile terminal is not allowed to access to said first mobile network from said determined location of said mobile terminal, and an operation of including, if said first message does not include said indication that said mobile terminal supports mobile network selection based on information provided by an access and mobility management function entity, said cause of said rejection of access of said mobile terminal to said first mobile network to said first message, wherein said cause of said rejection of access of said mobile terminal to said first mobile network is not indicative of that said mobile terminal is not allowed to access to said first mobile network from said determined location of said mobile terminal.

According to further example embodiments, said second message is a registration request message or a service request message.

According to further example embodiments, said first message is a registration reject message, a service reject message, or a deregistration request message.

Example embodiments are explained below in more specific terms.

In detail, according to the invention, in addition to the REGISTRATION REJECT message, the SERVICE REJECT message and the DEREGISTRATION REQUEST message are enhanced so that they can be used to indicate that the UE is not allowed to access a certain PLMN from the present UE location. In other words, according to example embodiments, a cause value indicating that the UE is not allowed to access a certain PLMN from the present UE location is added to the REGISTRATION REJECT message, the SERVICE REJECT message, and the DEREGISTRATION REQUEST message.

Namely, during the idle mode, a UE could have crossed the border while still being registered to the same PLMN. In this case, when the UE sends a SERVICE REQUEST message to transition to the connected mode, according to example embodiments, the service request is rejected with an indication that the UE is not allowed to access the PLMN at the present location.

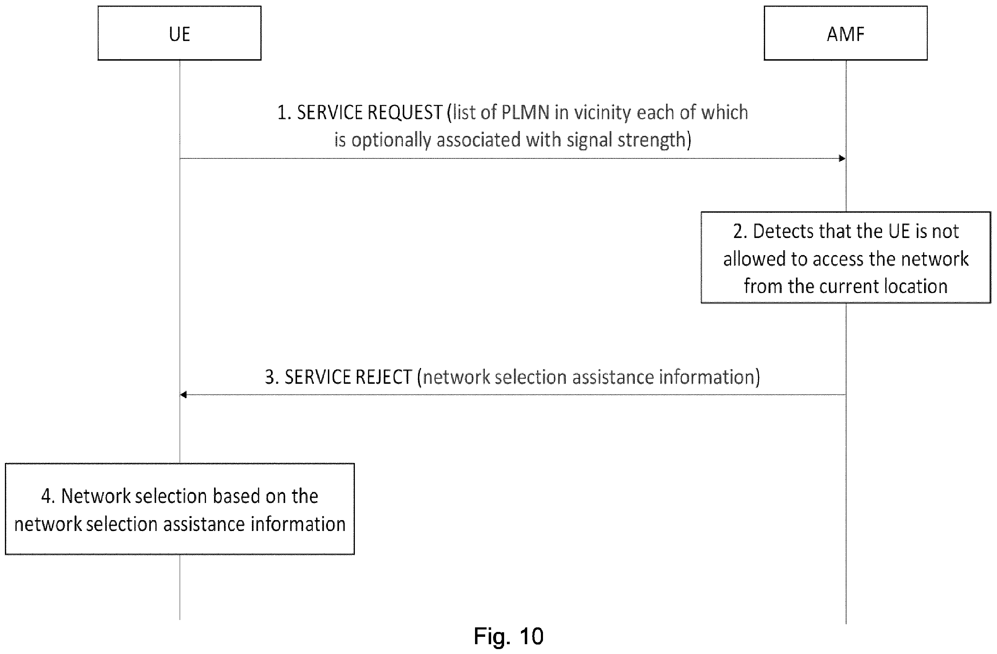

Figure 10 shows a schematic diagram of signaling sequences according to example embodiments considering the above.

In step 1 of Figure 10, the UE transmits a SERVICE REQUEST message to the AMF. In the present example embodiment, the message contains a list of PLMNs in the vicinity of the UE, each of which is optionally associated with a signal strength.

According to example embodiments, the UE provides its location as coordinates using GNSS to the network, or the network fetches the UE location if possible. According to further example embodiments, the UE scans for PLMN IDs that are broadcasted from base stations in its vicinity, optionally together with the signal strength or other information the UE has available, and sends a corresponding list to the network (AMF).

In step 2 of Figure 10, the AMF detects that the UE is not allowed to access the network from the current (UE's) location.

In step 3 of Figure 10, the AMF transmits a SERVICE REJECT message.

The SERVICE REJECT message includes network selection assistance information.

In step 4 of Figure 10, the UE performs a network selection based on the network selection assistance information.

It may take some time for the network to fetch the location of the UE or, for signaling load management, the network can delay some location procedures. As such, the network would not be able to immediately respond to the request received from the UE and to at the same time react to the lack of allowance of the UE to connect to a specific PLMN.

In view thereof, according to example embodiments, the network is able to trigger de-registration of the UE with the indication that the UE is not allowed to access the PLMN at the present location (e.g. as soon as such mismatch was detected).

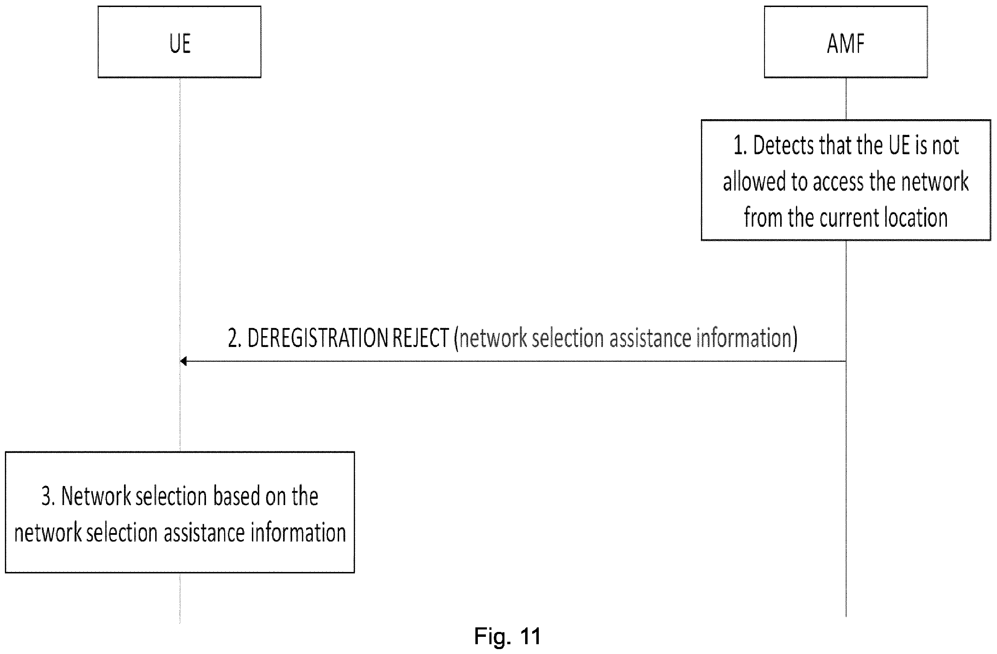

Figure 11 shows a schematic diagram of signaling sequences according to example embodiments considering the above.

In step 1 of Figure 11 the AMF detects that the UE is not allowed to access the network from the current (UE's) location.

In step 2 of Figure 11, the AMF transmits a DEREGISTRATION REQUEST (DEREGISTRATION REJECT) message.

The DEREGISTRATION REQUEST (DEREGISTRATION REJECT) message includes network selection assistance information.

In step 3 of Figure 11, the UE performs a network selection based on the network selection assistance information.

According to example embodiments in relation to detailed UE behaviors upon receiving the message (indicating that the UE is not allowed to access the PLMN from the present location) from the network, the UE performs abnormal case handling when a message as described above is e.g. received via non-3GPP access, via a standalone non-public network (SNPN), or via a closed access group cell. These cases do not limit example embodiments. Rather, such behavior may be applied also in other abnormal cases.

According to example embodiments, the UE sets the 5G system (5GS) update status to 5U3 ROAMING NOT ALLOWED.

According to example embodiments, the UE enters the state 5GMM-DEREGISTERED.LIMITED-SERVICE or optionally 5GMM-(DE)REGISTERED.PLMN-SEARCH.

According to example embodiments, the UE can then select a new PLMN based on the received network selection assistance information, e.g. a PLMN where the PLMN ID contains a certain MCC.

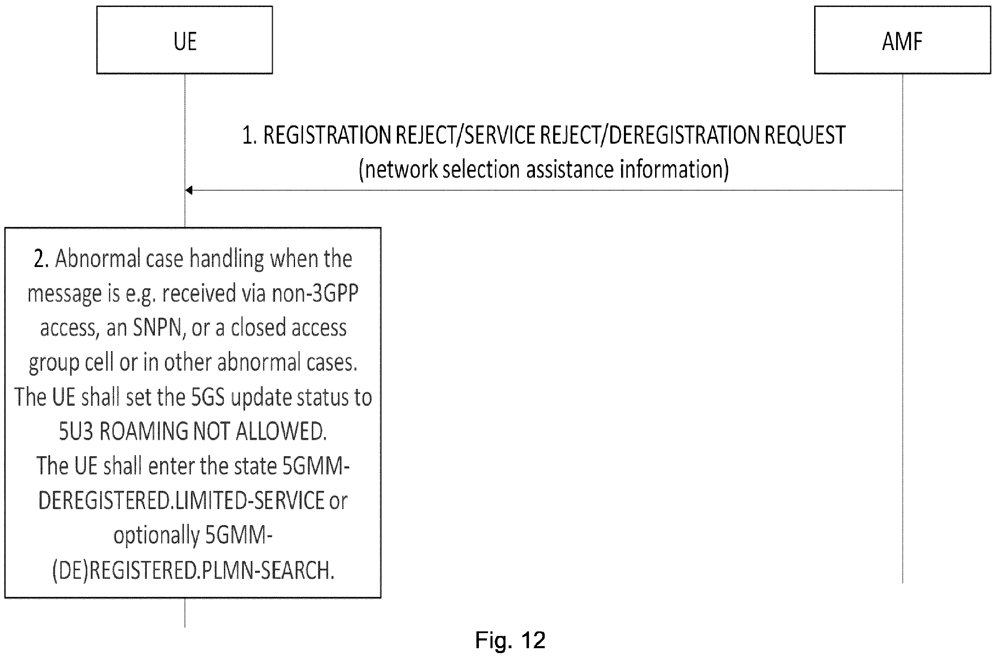

Figure 12 shows a schematic diagram of signaling sequences according to example embodiments considering the above.

In step 1 of Figure 12, the AMF transmits a REGISTRATION REJECT message or SERVICE REJECT message or DEREGISTRATION REQUEST message as explained above.

The message includes network selection assistance information.

In step 2 of Figure 12, the UE performs an abnormal case handling when the message is e.g. received via non-3GPP access, via an SNPN, or view a closed access group cell. The UE sets the 5GS update status to 5U3 ROAMING NOT ALLOWED. The UE may enter the state 5GMM-DEREGISTERED.LIMITED-SERVICE or optionally 5GMM-(DE)REGISTERED.PLMN-SEARCH.

According to example embodiments in relation to the behavior of a UE not supporting network selection assistance information, the UE indicates whether it supports network selection assistance information. If the UE indicates that it does not support network selection assistance information, the network uses another existing 5GMM cause value (e.g. cause value "#13, roaming not allowed in this tracking area") instead of the cause value according to example embodiments as explained above to indicate that the UE is not allowed to access the PLMN from the current location.

According to example embodiments, the UE then behaves as defined for this cause value (e.g. for cause value "#13, roaming not allowed in this tracking area"), e.g. scans for a new PLMN or de-registers from the network.

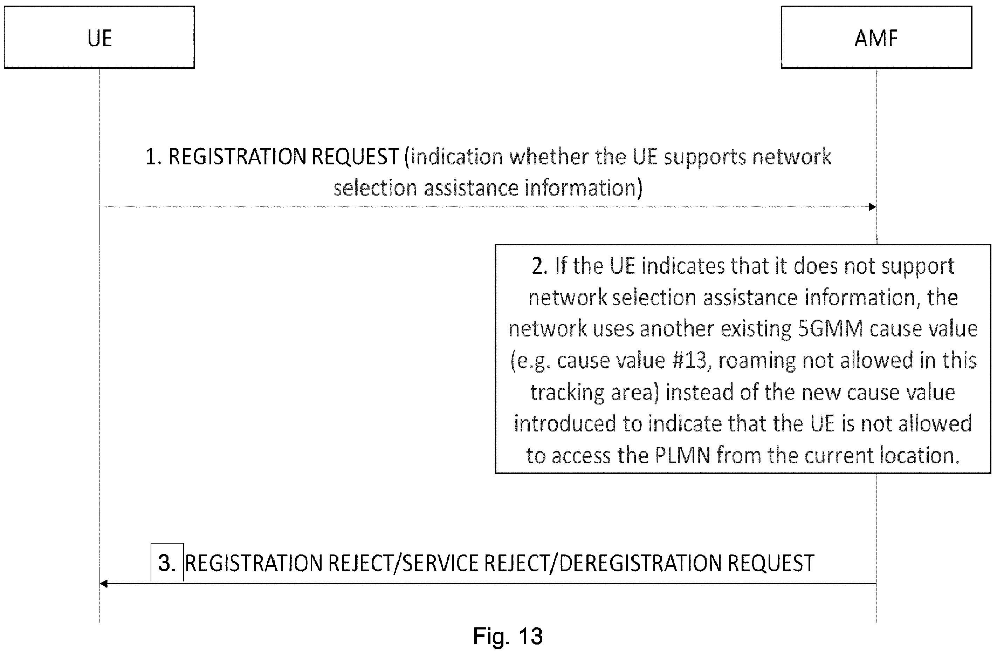

Figure 13 shows a schematic diagram of signaling sequences according to example embodiments considering the above.

In step 1 of Figure 13, the UE transmits a REGISTRATION REQUEST message (or SERVICE REQUEST message) to the AMF.

The message includes an indication whether the UE supports network selection assistance information.

In step 2 of Figure 13, the AMF, if the UE has indicated that it does not support network selection assistance information (i.e., if the UE has not indicated that it supports network selection assistance information), the network uses another existing 5GMM cause value (e.g. cause value "#13, roaming not allowed in this tracking area") instead of the cause value according to example embodiments as explained above to indicate that the UE is not allowed to access the PLMN from the current location.

In step 3 of Figure 13, the AMF transmits a REGISTRATION REJECT message or a SERVICE REJECT message or a DEREGISTRATION REQUEST message indicative of the another existing 5GMM cause value (e.g. cause value "#13, roaming not allowed in this tracking area").

According to example embodiments in relation to keeping the network selection assistance information in the UE, the current PLMN and PLMN(s) corresponding to the network selection assistance information is avoided during the next PLMN selection process only under the assumption that the network selection assistance information is blacklist-based. If the network selection assistance information is whitelist-based, according to example embodiments, only PLMN(s) corresponding to the network selection assistance information are allowed during the next PLMN selection process. According to further example embodiments, the UE has an implementation-specific timer to manage how long such information (the current PLMN and network selection assistance information) can be kept in the UE. In this case the information can be used for multiple PLMN selection processes.

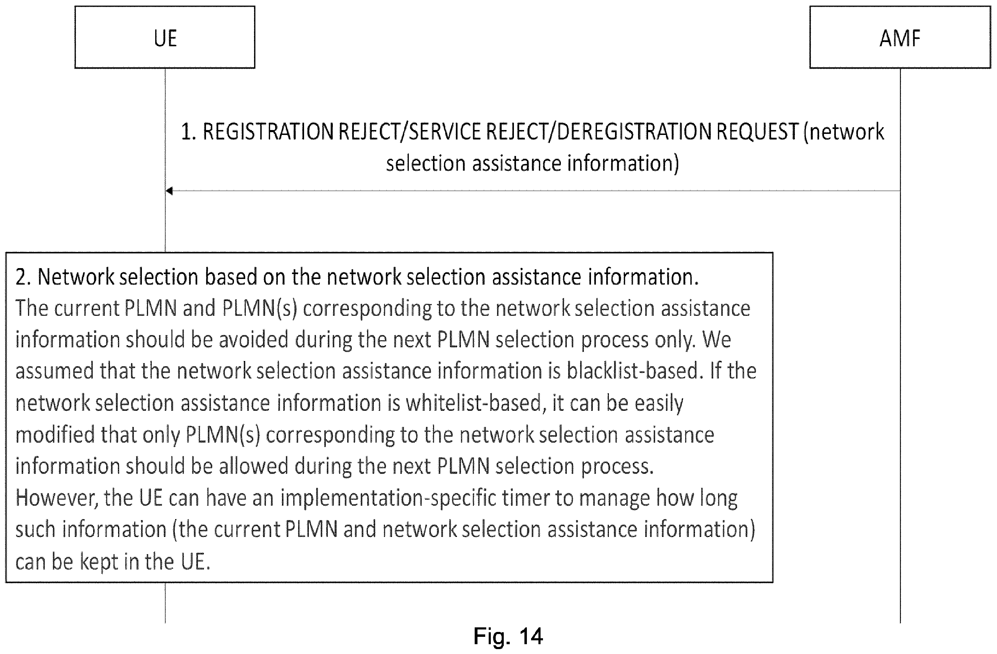

Figure 14 shows a schematic diagram of signaling sequences according to example embodiments considering the above.

In step 1 of Figure 14, the AMF transmits a REGISTRATION REJECT message or SERVICE REJECT message or DEREGISTRATION REQUEST message as explained above.

The message includes network selection assistance information.

In step 2 of Figure 14, the UE performs network selection based on the network selection assistance information. Here, the current PLMN and PLMN(s) corresponding to the network selection assistance information is avoided during the next PLMN selection process only under the assumption that the network selection assistance information is blacklist-based. If the network selection assistance information is whitelist-based, only PLMN(s) corresponding to the network selection assistance information are allowed during the next PLMN selection process. The UE can have an implementation-specific timer to manage how long such information (the current PLMN and network selection assistance information) can be kept in the UE.

According to example embodiments in relation to handling a message including network selection assistance information that is not integrity protected, non-integrity protected messages indicating that the UE is not allowed to access the PLMN from the present location are ignored by the UE.

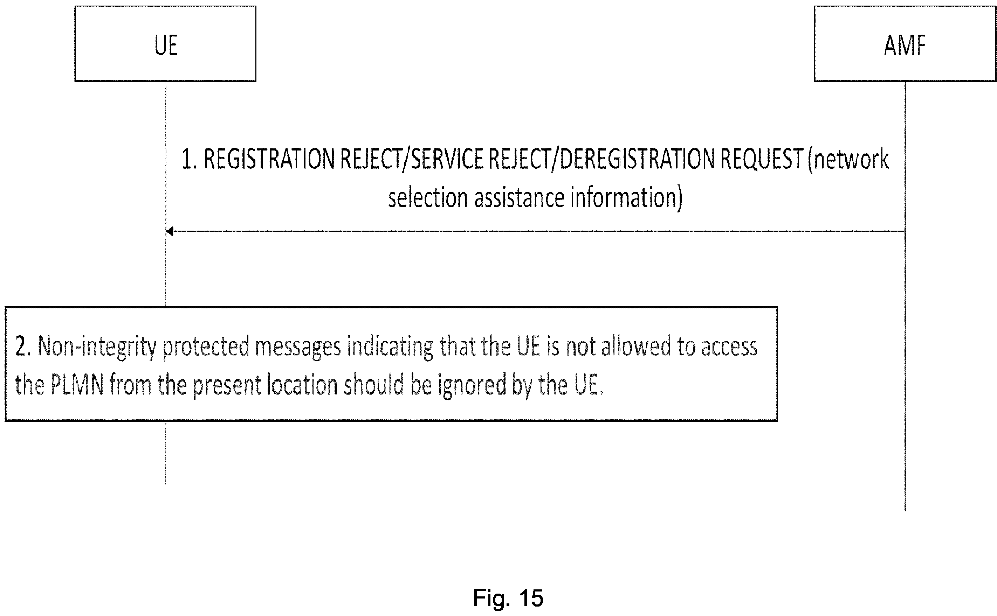

Figure 15 shows a schematic diagram of signaling sequences according to example embodiments considering the above.

In step 1 of Figure 15, the AMF transmits a REGISTRATION REJECT message or SERVICE REJECT message or DEREGISTRATION REQUEST message as explained above.

The message includes network selection assistance information.

In step 2 of Figure 15, the UE ignores the message (REGISTRATION REJECT message or SERVICE REJECT message or DEREGISTRATION REQUEST message) indicating that the UE is not allowed to access the PLMN from the present location, if the message (REGISTRATION REJECT message or SERVICE REJECT message or DEREGISTRATION REQUEST message) is a non-integrity protected message.

According to example embodiments in relation to prioritization of PLMN and RAT combinations aligned/matched with the UE's location (UE location information) during manual network selection, the UE displays an indication to the user whether the available PLMNs are aligned/matching with the network selection assistance information using free text.

According to further example embodiments, the UE displays the country name together with the available and allowed PLMN(s). The country name displayed to the user is set based on the MCC of the PLMN and the configured information in the UE (information available in the mobile equipment (ME) which could be obtained via the network identity and time zone (NITZ) mechanism or be configured on the universal subscriber identity module (USIM)).

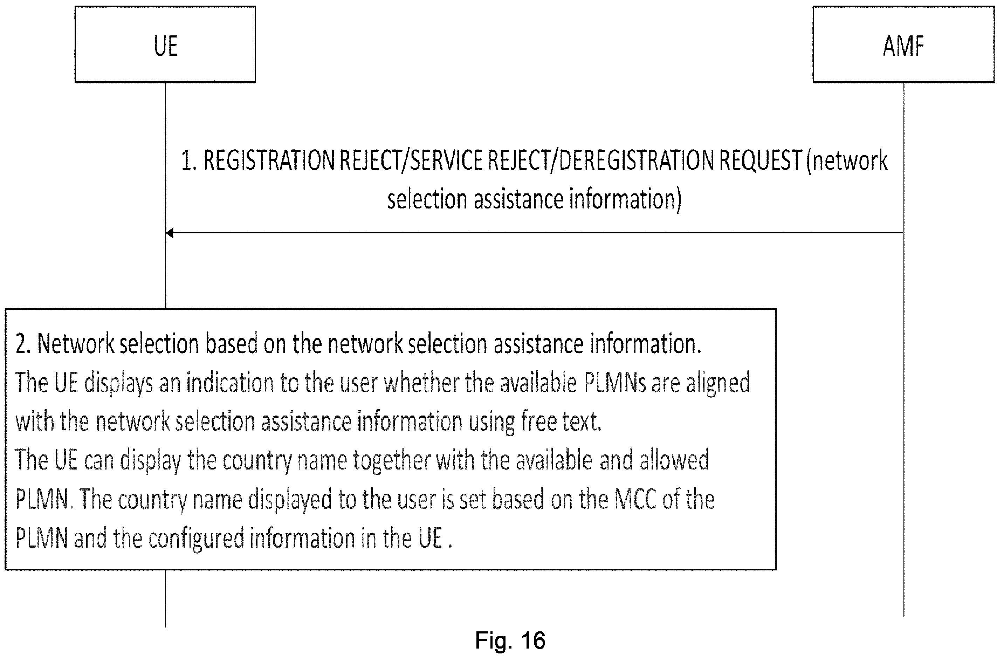

Figure 16 shows a schematic diagram of signaling sequences according to example embodiments considering the above.

In step 1 of Figure 16, the AMF transmits a REGISTRATION REJECT message or SERVICE REJECT message or DEREGISTRATION REQUEST message as explained above.

The message includes network selection assistance information.

In step 2 of Figure 16, the UE performs network selection based on the network selection assistance information. Here, the UE displays an indication to the user whether the available PLMNs are aligned/matching with the network selection assistance information using free text. Alternatively, the UE displays the country name together with the available and allowed PLMN(s). The country name displayed to the user is set based on the MCC of the PLMN and the configured information in the UE.

Example embodiments are specified below in other words.

These example embodiments substantially related to UE and network behavior are specified below exemplarily with the existing specifications (in particular 3GPP TS 24.501, 3GPP TS 23.122) as baseline, but are not to be understood as limiting.

### Initial registration not accepted by the network

### Network behavior

According to example embodiments, if the registration is rejected because the UE attempted to register to the PLMN which the UE is not allowed to access in the present location and the UE indicated that it supports network selection assistance information, if such an indication mechanism (i.e. the UE indicates whether it supports network selection assistance information during the registration procedure) is made available, the AMF sets the 5GMM cause value in the REGISTRATION REJECT message to a value indicating that the reason for the rejection is due to UE location (e.g. the cause value could be "#xx (PLMN not allowed in the present location)") and may include information that can be used for network selection, called "network selection assistance information", in the REGISTRATION REJECT message.

According to further example embodiments, if the UE can indicate whether it supports network selection assistance information, if the registration is rejected by the network because the UE attempted to register to a PLMN which the UE is not allowed to access in the present location and the UE did not indicate that it supports network selection assistance information, the network rejects the registration with a 5GMM cause value other than the above-mentioned 5GMM cause indicating that the reason for the rejection is due to UE location, e.g. with cause value "#13 (Roaming not allowed in this tracking area)". According to example embodiments, the exact cause value to be used can be defined by the operator.

### Initial registration not accepted by the network

### UE behavior

According to example embodiments, the UE takes the following actions depending on the 5GMM cause value received in the REGISTRATION REJECT message. In particular, according to example embodiments, the UE takes the following actions if the 5GMM cause value received in the REGISTRATION REJECT message is the 5GMM cause indicating that the reason for the rejection is due to UE location (e.g. "#xx (PLMN not allowed in the present location)"):
If the REGISTRATION REJECT message with this cause value is received without integrity protection, then the UE discards the message.

If this cause value is received via non-3GPP access, an SNPN, or a closed access group cell (or in other abnormal cases), this is considered as an abnormal case and the behavior of the UE is specified in bullet c) of subclause 5.5.1.2.7 in 3GPP TS 24.501.

The UE shall set the 5GS update status to 5U3 ROAMING NOT ALLOWED (and shall store it according to subclause 5.1.3.2.2 of 3GPP TS 24.501) and shall delete 5G-GUTI, last visited registered TAI, TAI list and ngKSI. Additionally, the UE shall delete the list of equivalent PLMNs (if available) and reset the registration attempt counter.

The UE shall enter the state 5GMM-DEREGISTERED.LIMITED-SERVICE or optionally 5GMM-DEREGISTERED.PLMN-SEARCH. The UE can then select a new PLMN based on the received network selection assistance information, e.g. a PLMN where the PLMN ID contains a certain MCC.

According to example embodiments, if the UE is registered in S1 mode and operating in dual-registration mode, the PLMN that the UE chooses to register in is specified in subclause 4.8.3 of 3GPP TS 24.501. Otherwise, the UE performs a PLMN selection according to 3GPP TS 23.122. The UE shall not consider the current PLMN as an available PLMN during the PLMN selection (or more specifically when estimating PLMNs applicable for bullets i), ii), iii) of clause 4.4.3.1.1 in 3GPP TS 23.122). In addition, if the REGISTRATION REQUEST message includes network selection assistance information and the network selection assistance information contains one or more PLMNs, then the UE shall not consider the PLMN(s) as available PLMN(s) during the PLMN selection (or more specifically when estimating PLMNs applicable for bullets i), ii), iii) of clause 4.4.3.1.1 in 3GPP TS 23.122). Alternatively, if the REGISTRATION REQUEST message includes network selection assistance information and the network selection assistance information contains one or more MCCs, then the UE shall not consider PLMN(s) including the MCC(s) as available PLMN(s) during the PLMN selection (or more specifically when estimating PLMNs applicable for bullets i), ii), iii) of clause 4.4.3.1.1 in 3GPP TS 23.122).

According to example embodiments, if the UE needs to perform manual PLMN selection, the UE indicates to the user whether the available PLMNs are aligned with the network selection assistance information.

According to example embodiments, the UE remembers the current PLMN and the network selection assistance information for implementation-specific time for PLMN selections.

### Mobility and periodic registration update not accepted by the network

According to example embodiments, the network and the UE show almost the same network and UE behavior compared to the initial registration explained above ("Initial registration not accepted by the network").

Two key differences according to example embodiments are that the UE needs to enter 5GMM-REGISTERED.PLMN-SEARCH state, and that the abnormal case handling is specified in bullet c) of subclause 5.5.1.3.7 in 3GPP TS 24.501.

### Network-initiated de-registration procedure completed by the UE Network behavior

According to example embodiments, if the UE needs to be de-registered because the UE is registered to the PLMN which the UE is not allowed to access in the present location and the UE indicated that it supports network selection assistance information, if such an indication mechanism (i.e. the UE indicates whether it supports network selection assistance information during the registration procedure) is made available, the AMF sets the 5GMM cause value in the DEREGISTRATION REQUEST message to a value indicating that the reason for the de-registration is due to UE location (e.g. "#xx (PLMN not allowed in the present location)") and may include information that can be used for network selection in the DEREGISTRATION REQUEST message.

According to further example embodiments, if the UE can indicate whether it supports network selection assistance information, the network behaves as follows. Based on operator policy, if the UE needs to be de-registered because the UE is registered to the PLMN which the UE is not allowed to access in the present location and the UE indicated that it does not support network selection assistance information (did not indicate that it supports network selection assistance information), the network sends a de-registration request with a 5GMM cause value other than the above-mentioned 5GMM cause indicating that the reason for the rejection is due to UE location, e.g. with cause value "#13 (Roaming not allowed in this tracking area)".

### Network-initiated de-registration procedure completed by the UE UE behavior

According to example embodiments, the UEs show almost the same UE behavior compared to the initial registration explained above ("Initial registration not accepted by the network").

Two key differences according to example embodiments are that the UE needs to enter 5GMM-DEREGISTERED.PLMN-SEARCH state, and that the abnormal case handling is specified in bullet b) of subclause 5.5.2.3.4 in 3GPP TS 24.501.

### Service request procedure not accepted by the network

According to example embodiments, the network and the UE show almost the same network and UE behavior compared to the initial registration explained above ("Initial registration not accepted by the network").

Four key differences according to example embodiments are that the request is not a registration request but a service request, that the reject message is the SERVICE REJECT message not the REGISTRATION REJECT message, that the UE needs to enter 5GMM-REGISTERED.PLMN-SEARCH state, and that the abnormal case handling is specified in bullet i) of subclause 5.6.1.7 in 3GPP TS 24.501.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

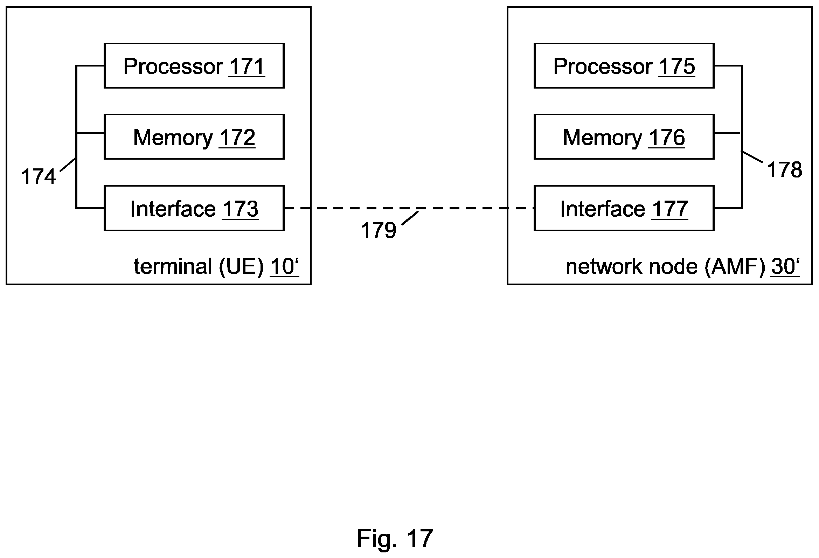

In Figure 17, an alternative illustration of apparatuses according to example embodiments is depicted. As indicated in Figure 17, according to example embodiments, the apparatus (terminal) 10' (corresponding to the terminal 10) comprises a processor 171, a memory 172 and an interface 173, which are connected by a bus 174 or the like. Further, according to example embodiments, the apparatus (network node) 30' (corresponding to the network node 30) comprises a processor 175, a memory 176 and an interface 177, which are connected by a bus 178 or the like, and the apparatuses may be connected via link 179, respectively.

The processor 171/175 and/or the interface 173/177 may also include a modem or the like to facilitate communication over a (hardwire or wireless) link, respectively. The interface 173/177 may include a suitable transceiver coupled to one or more antennas or communication means for (hardwire or wireless) communications with the linked or connected device(s), respectively. The interface 173/177 is generally configured to communicate with at least one other apparatus, i.e. the interface thereof.

The memory 172/176 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the terminal 10 comprises at least one processor 171, at least one memory 172 including computer program code, and at least one interface 173 configured for communication with at least another apparatus. The processor (i.e. the at least one processor 171, with the at least one memory 172 and the computer program code) is configured to perform receiving a rejection message indicative of rejection of access of said mobile terminal to a first mobile network (thus the apparatus comprising corresponding means for receiving), to perform prohibiting modification of an information tag included in a second system information block to be broadcasted, said information tag being indicative of a change of said list (thus the apparatus comprising corresponding means for prohibiting), and to perform affecting, if said cause of said rejection of access of said mobile terminal to said first mobile network is indicative of that said mobile terminal is not allowed to access to said first mobile network from a determined location of said mobile terminal, a selection of a second mobile network to be accessed based on a content of said rejection message (thus the apparatus comprising corresponding means for affecting).

According to example embodiments, an apparatus representing the network node 30 comprises at least one processor 175, at least one memory 176 including computer program code, and at least one interface 177 configured for communication with at least another apparatus. The processor (i.e. the at least one processor 175, with the at least one memory 176 and the computer program code) is configured to perform ascertaining whether a mobile terminal is allowed to access to a first mobile network from a determined location of said mobile terminal (thus the apparatus comprising corresponding means for ascertaining), and to perform transmitting, if said mobile terminal is not allowed to access to said first mobile network from a determined location of said mobile terminal, a rejection message indicative of rejection of access of said mobile terminal to said first mobile network (thus the apparatus comprising corresponding means for transmitting).

For further details regarding the operability/functionality of the individual apparatuses, reference is made to the above description in connection with any one of Figures 1 to 17, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for location based network access management. Such measures exemplarily comprise receiving a rejection message indicative of rejection of access of said mobile terminal to a first mobile network, checking for a cause of said rejection of access of said mobile terminal to said first mobile network, and affecting, if said cause of said rejection of access of said mobile terminal to said first mobile network is indicative of that said mobile terminal is not allowed to access to said first mobile network from a determined location of said mobile terminal, a selection of a second mobile network to be accessed based on a content of said rejection message.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

List of acronyms and abbreviations
- 3GPP: Third Generation Partnership Project
- 5GMM: 5GS mobility management
- 5GS: 5G system
- AMF: access and mobility management function
- CR: change request
- GNSS: global navigation satellite system
- GUTI: globally unique temporary identity
- LI: lawful interception
- MCC: mobile country code
- MCC+MNC: mobile country code and mobile network code
- ME: mobile equipment
- MNC: mobile network code
- ngKSI: next generation key set identifier
- NITZ: network identity and time zone
- PDU: protocol data unit
- PLMN: public mobile land network
- PLMN ID: PLMN identity
- PSAP: public safety answering point
- PWS: public warning system
- RAN: radio access network
- RAT: radio access technology
- SNPN: standalone non-public network
- TAI: tracking area identity
- TR: technical report
- TS: technical specification
- UE: user equipment
- USIM: universal subscriber identity module

## Claims

1. A method performed by a mobile terminal (10, 10'), the method comprising
receiving (S51) a first message including an indication of rejection of access of said mobile terminal to a first mobile network and network selection assistance information,
checking said indication included in said first message for a cause of said rejection of access of said mobile terminal to said first mobile network,
examining (S53), if said cause of said rejection of access of said mobile terminal to said first mobile network is indicative of that said mobile terminal is not allowed to access to said first mobile network from a determined location of said mobile terminal, validity of said first message, wherein examining said validity of said first message comprises detecting whether said first message is integrity protected,
if said first message is not integrity protected, considering said first message invalid and ignoring said first message, and
if said first message is integrity protecting, considering said first message valid and affecting (S54) a selection of a second mobile network to be accessed based on the network selection assistance information included in said first message.

2. The method according to claim 1, further comprising
sending a second message including information implying a present location of said mobile terminal and/or an indication whether said mobile terminal supports mobile network selection based on network selection assistance information provided by an access and mobility management function entity, wherein
said first message is a response to said second message.

3. The method according to claim 1, wherein
said first message is a registration reject message, a service reject message, or a deregistration request message.

4. The method according to claim 2, wherein
said first message is a registration reject message and said second message is a registration request message or said first message is a service reject message and said second message is a service request message.

5. The method according to claim 2 or 4, wherein said second message includes information implying a present location of said mobile , and wherein said information implying a present location of said mobile terminal includes at least one of
coordinates of the present location of the mobile terminal detected utilizing a global navigation satellite system, and
a cell identifier of a radio cell said mobile terminal is connected to, and
optionally, wherein said second message includes a list of received mobile network identifiers in a vicinity of said mobile device.

6. The method according any one of claim 1 to 5, wherein
said network selection assistance information comprises information on mobile networks to which said mobile terminal is not allowed to access from said determined location of said mobile terminal, wherein
said affecting (s54) comprises
deprioritizing, in candidate mobile networks, said mobile networks to which said mobile terminal is not allowed to access from said determined location of said mobile terminal, and preferably displaying each of said mobile networks to which said mobile terminal is not allowed to access from said determined location of said mobile terminal associated with an indication that said mobile terminal is not allowed to access from said determined location of said mobile terminal; and
selecting said second mobile network from said candidate mobile networks.

7. The method according any one of claims 1 to 5, wherein
said network selection assistance information comprises information on mobile networks to which said mobile terminal is allowed to access from said determined location of said mobile terminal, wherein
said affecting (s54) comprises
prioritizing, in candidate mobile networks, said mobile networks to which said mobile terminal is allowed to access from said determined location of said mobile terminal, and preferably displaying each of said mobile networks to which said mobile terminal is not allowed to access from said determined location of said mobile terminal associated with an indication that said mobile terminal is allowed to access from said determined location of said mobile terminal, and
selecting said second mobile network from said candidate mobile networks.

8. A method performed by an access and mobility management function entity (30, 30'), the method comprising
determining a location of a mobile terminal,
ascertaining whether said mobile terminal is allowed to access to a first mobile network from said location of said mobile terminal, and
transmitting, if said mobile terminal is not allowed to access to said first mobile network from said location of said mobile terminal, an integrity protected first message comprising a cause of rejection of access of said mobile terminal to said first mobile network and network selection assistance information, wherein said cause of said rejection of access of said mobile terminal to said first mobile network is indicative of that said mobile terminal is not allowed to access to said first mobile network from said location of said mobile terminal; and wherein said network selection assistance information serves as basis for a selection of a second mobile network to be accessed by the mobile terminal.

9. The method according to claim 8, further comprising
receiving, from said mobile terminal, a second message including information implying a present location of said mobile terminal, wherein
said integrity protected first message is a response to said second message, and
determining said location of the mobile terminal based on said information implying said present location of said mobile terminal.

10. The method according to claim 9, wherein
said information implying a present location of said mobile terminal includes at least one of
coordinates of the present location of the mobile terminal detected by the mobile terminal utilizing a global navigation satellite system, and
a cell identifier of a radio cell said mobile terminal is connected to, and
optionally, wherein said second message further includes a list of mobile network identifiers in a vicinity of said mobile terminal.

11. The method according to claim 9 or 10, further comprising
generating network selection assistance information based on said information implying a present location of said mobile terminal, and
including said selection assistance information in said integrity protected first message.

12. The method according claim 11, wherein
said network selection assistance information comprises information on mobile networks to which said mobile terminal is not allowed to access from said determined location of said mobile terminal, or
said network selection assistance information comprises information on mobile networks to which said mobile terminal is allowed to access from said determined location of said mobile terminal.

13. The method according to any of claims 9 to 12, further comprising
checking whether said second message includes an indication that said mobile terminal supports mobile network selection based on network selection assistance information provided by said access and mobility management function entity,
including, if said second message includes said indication that said mobile terminal supports mobile network selection based on network selection assistance information provided by an access and mobility management function entity, said cause of said rejection of access of said mobile terminal to said first mobile network to said first message, wherein said cause of said rejection of access of said mobile terminal to said first mobile network is indicative of that said mobile terminal is not allowed to access to said first mobile network from said determined location of said mobile terminal.

14. A mobile terminal (10') comprising
at least one processor (171),
at least one memory (172) including computer program code, and
at least one interface (173) configured for communication with at least an access and mobility function entity,
the at least one processor (171), with the at least one memory (172) and the computer program code, being configured to cause the mobile terminal (10') to perform the method according to any one of claims 1 to 7.

15. An access and mobility management function entity (30'), the access and mobility function entity comprising
at least one processor (175),
at least one memory (176) including computer program code, and
at least one interface (177) configured for communication with at least another apparatus,
the at least one processor (175), with the at least one memory (175) and the computer program code, being configured to cause the access and mobility function entity (30') to perform the method of any one of claims 8 to 13.

## Patentansprüche

1. Verfahren, das von einem mobilen Endgerät (10, 10') durchgeführt wird, wobei das Verfahren Folgendes umfasst
Empfangen (S51) einer ersten Nachricht, die eine Anzeige einer Zurückweisung eines Zugriffs des mobilen Endgeräts auf ein erstes Mobilfunknetzwerk und Netzwerkauswahlunterstützungsinformationen beinhaltet,
Prüfen der Anzeige, die in der ersten Nachricht beinhaltet ist, auf eine Ursache der Zurückweisung eines Zugriffs des mobilen Endgeräts auf das erste Mobilfunknetzwerk,
wenn die Ursache für die Zurückweisung eines Zugriffs des mobilen Endgeräts auf das erste Mobilfunknetzwerk anzeigt, dass es dem mobilen Endgerät nicht erlaubt ist, von einem bestimmten Standort des mobilen Endgeräts auf das erste Mobilfunknetzwerk zuzugreifen, Untersuchen (S53) einer Gültigkeit der ersten Nachricht, wobei das Untersuchen der Gültigkeit der ersten Nachricht das Detektieren umfasst, ob die erste Nachricht integritätsgeschützt ist,
wenn die erste Nachricht nicht integritätsgeschützt ist, Betrachten der ersten Nachricht als ungültig und Ignorieren der ersten Nachricht, und
wenn die erste Nachricht integritätsgeschützt ist, Betrachten der ersten Nachricht als gültig und Beeinträchtigen (S54) einer Auswahl eines zweiten Mobilfunknetzwerks, auf das auf Basis der Netzwerkauswahlunterstützungsinformationen, die in der ersten Nachricht beinhaltet sind, zugegriffen werden soll.

2. Verfahren nach Anspruch 1, das ferner Folgendes umfasst Senden einer zweiten Nachricht, die Informationen, die einen gegenwärtigen Standort des mobilen Endgeräts implizieren, und/oder eine Anzeige beinhaltet, ob das mobile Endgerät auf Basis von Netzwerkauswahlunterstützungsinformationen, die von einer Zugriffs- und Mobilitätsverwaltungsfunktionsentität bereitgestellt werden, eine Mobilfunknetzwerkauswahl unterstützt, wobei
die erste Nachricht eine Antwort auf die zweite Nachricht ist.

3. Verfahren nach Anspruch 1, wobei
die erste Nachricht eine Registrierungszurückweisungsnachricht, eine Dienstzurückweisungsnachricht oder eine Deregistrierungsanforderungsnachricht ist.

4. Verfahren nach Anspruch 2, wobei
die erste Nachricht eine Registrierungszurückweisungsnachricht ist und die zweite Nachricht eine Registrierungsanforderungsnachricht ist oder die erste Nachricht eine Dienstzurückweisungsnachricht ist und die zweite Nachricht eine Dienstanforderungsnachricht ist.

5. Verfahren nach Anspruch 2 oder 4, wobei die zweite Nachricht Informationen beinhaltet, die einen gegenwärtigen Standort des mobilen Endgeräts implizieren, und wobei die Informationen, die einen gegenwärtigen Standort des mobilen Endgeräts implizieren, mindestens eines von Folgendem beinhalten
Koordinaten des gegenwärtigen Standorts des mobilen Endgeräts, die unter Nutzung eines globalen Navigationssatellitensystems detektiert wurden, und
einer Zellkennung einer Funkzelle, mit der das mobile Endgerät verbunden ist, und
wahlweise wobei die zweite Nachricht eine Liste von empfangenen Mobilfunknetzwerkkennungen in einer Nähe der mobilen Vorrichtung beinhaltet.

6. Verfahren nach einem der Ansprüche 1 bis 5, wobei
die Netzwerkauswahlunterstützungsinformationen Informationen über Mobilfunknetzwerke umfassen, auf die zuzugreifen dem mobilen Endgerät vom bestimmten Standort des mobilen Endgeräts nicht erlaubt ist, wobei
das Beeinträchtigen (s54) Folgendes umfasst
Entpriorisieren der Mobilfunknetzwerke, auf die zuzugreifen dem mobilen Endgerät vom bestimmten Standort des mobilen Endgeräts nicht erlaubt ist, in Mobilfunknetzwerkkandidaten und vorzugsweise Anzeigen von jedem der Mobilfunknetzwerke, auf die zuzugreifen dem mobilen Endgerät vom bestimmten Standort des mobilen Endgeräts nicht erlaubt ist, in Verknüpfung mit einer Anzeige, dass es dem mobilen Endgerät nicht erlaubt ist, vom bestimmten Standort des mobilen Endgeräts zuzugreifen; und
Auswählen des zweiten Mobilfunknetzwerks aus den Mobilfunknetzwerkkandidaten.

7. Verfahren nach einem der Ansprüche 1 bis 5, wobei
die Netzwerkauswahlunterstützungsinformationen Informationen über Mobilfunknetzwerke umfassen, auf die zuzugreifen dem mobilen Endgerät vom bestimmten Standort des mobilen Endgeräts erlaubt ist, wobei
das Beeinträchtigen (s54) Folgendes umfasst
Priorisieren der Mobilfunknetzwerke, auf die zuzugreifen dem mobilen Endgerät vom bestimmten Standort des mobilen Endgeräts erlaubt ist, in Mobilfunknetzwerkkandidaten und vorzugsweise Anzeigen von jedem der Mobilfunknetzwerke, auf die zuzugreifen dem mobilen Endgerät vom bestimmten Standort des mobilen Endgeräts nicht erlaubt ist, in Verknüpfung mit einer Anzeige, dass es dem mobilen Endgerät erlaubt ist, vom bestimmten Standort des mobilen Endgeräts zuzugreifen; und
Auswählen des zweiten Mobilfunknetzwerks aus den Mobilfunknetzwerkkandidaten.

8. Verfahren, das von einer Zugriffs- und Mobilitätsverwaltungsfunktionsentität (30, 30') durchgeführt wird, wobei das Verfahren Folgendes umfasst
Bestimmen eines Standorts eines mobilen Endgeräts,
Ermitteln, ob es dem mobilen Endgerät erlaubt ist, vom Standort des mobilen Endgeräts auf ein erstes Mobilfunknetzwerk zuzugreifen, und
wenn es dem mobilen Endgerät nicht erlaubt ist, vom Standort des mobilen Endgeräts auf das erste Mobilfunknetzwerk zuzugreifen, Übertragen einer integritätsgeschützten ersten Nachricht, die eine Ursache einer Zurückweisung eines Zugriffs des mobilen Endgeräts auf das erste Mobilfunknetzwerk und Netzwerkauswahlunterstützungsinformationen umfasst, wobei die Ursache der Zurückweisung eines Zugriffs des mobilen Endgeräts auf das erste Mobilfunknetzwerk anzeigt, dass es dem mobilen Endgerät nicht erlaubt ist, vom Standort des mobilen Endgeräts auf das erste Mobilfunknetzwerk zuzugreifen; und wobei die Netzwerkauswahlunterstützungsinformationen als Basis für eine Auswahl eines zweiten Mobilfunknetzwerks dient, auf das das mobile Endgerät zugreifen soll.

9. Verfahren nach Anspruch 8, das ferner Folgendes umfasst
Empfangen einer zweiten Nachricht, die Informationen beinhaltet, die einen gegenwärtigen Standort des mobilen Endgeräts implizieren, vom mobilen Endgerät, wobei
die integritätsgeschützte erste Nachricht eine Antwort auf die zweite Nachricht ist, und
Bestimmen des Standorts des mobilen Endgeräts auf Basis der Informationen, die den gegenwärtigen Standort des mobilen Endgeräts implizieren.

10. Verfahren nach Anspruch 9, wobei
die Informationen, die einen gegenwärtigen Standort des mobilen Endgeräts implizieren, mindestens eines von Folgendem beinhalten
Koordinaten des gegenwärtigen Standorts des mobilen Endgeräts, die unter Nutzung eines globalen Navigationssatellitensystems vom mobilen Endgerät detektiert wurden, und
einer Zellkennung einer Funkzelle, mit der das mobile Endgerät verbunden ist, und
wahlweise wobei die zweite Nachricht ferner eine Liste von Mobilfunknetzwerkkennungen in einer Nähe des mobilen Endgeräts beinhaltet.

11. Verfahren nach Anspruch 9 oder 10, das ferner Folgendes umfasst
Erzeugen von Netzwerkauswahlunterstützungsinformationen auf Basis der Informationen, die einen gegenwärtigen Standort des mobilen Endgeräts implizieren, und
Einbinden der Auswahlunterstützungsinformationen in die integritätsgeschützte erste Nachricht.

12. Verfahren nach Anspruch 11, wobei
die Netzwerkauswahlunterstützungsinformationen Informationen über Mobilfunknetzwerke umfassen, auf die zuzugreifen dem mobilen Endgerät vom bestimmten Standort des mobilen Endgeräts nicht erlaubt ist, oder
die Netzwerkauswahlunterstützungsinformationen Informationen über Mobilfunknetzwerke umfassen, auf die zuzugreifen dem mobilen Endgerät vom bestimmten Standort des mobilen Endgeräts erlaubt ist.

13. Verfahren nach einem der Ansprüche 9 bis 12, das ferner Folgendes umfasst
Prüfen, ob die zweite Nachricht eine Anzeige beinhaltet, dass das mobile Endgerät eine Mobilfunknetzwerkauswahl auf Basis von Netzwerkauswahlunterstützungsinformationen, die von der Zugriffs- und Mobilitätsverwaltungsfunktionsentität bereitgestellt werden, unterstützt,
wenn die zweite Nachricht die Anzeige beinhaltet, dass das mobile Endgerät eine Mobilfunknetzwerkauswahl auf Basis von Netzwerkauswahlunterstützungsinformationen, die von einer Zugriffs- und Mobilitätsverwaltungsfunktionsentität bereitgestellt werden, unterstützt, Einbinden der Ursache der Zurückweisung eines Zugriffs des mobilen Endgeräts auf das erste Mobilfunknetzwerk in die erste Nachricht, wobei die Ursache der Zurückweisung eines Zugriffs des mobilen Endgeräts auf das erste Mobilfunknetzwerk anzeigt, dass es dem mobilen Endgerät nicht erlaubt ist, vom bestimmten Standort des mobilen Endgeräts auf das erste Mobilfunknetzwerk zuzugreifen.

14. Mobiles Endgerät (10'), das Folgendes umfasst
mindestens einen Prozessor (171),
mindestens einen Speicher (172), der einen Computerprogrammcode beinhaltet, und
mindestens eine Schnittstelle (173), die zur Kommunikation mit mindestens einer Zugriffs- und Mobilitätsfunktionsentität ausgelegt ist,
wobei der mindestens eine Prozessor (171) mit dem mindestens einen Speicher (172) und dem Computerprogrammcode dazu ausgelegt ist, das mobile Endgerät (10') zu veranlassen, das Verfahren nach einem der Ansprüche 1 bis 7 durchzuführen.

15. Zugriffs- und Mobilitätsverwaltungsfunktionsentität (30'), wobei die Zugriffs- und Mobilitätsfunktionsentität Folgendes umfasst
mindestens einen Prozessor (175),
mindestens einen Speicher (176), der einen Computerprogrammcode beinhaltet, und
mindestens eine Schnittstelle (177), die zur Kommunikation mit mindestens einer anderen Vorrichtung ausgelegt ist,
wobei der mindestens eine Prozessor (175) mit dem mindestens einen Speicher (175) und dem Computerprogrammcode dazu ausgelegt ist, die Zugriffs- und Mobilitätsfunktionsentität (30') zu veranlassen, das Verfahren nach einem der Ansprüche 8 bis 13 durchzuführen.

## Revendications

1. Procédé réalisé par un terminal mobile (10, 10'), le procédé comprenant les étapes suivantes
recevoir (S51) un premier message comportant une indication de rejet d'accès dudit terminal mobile à un premier réseau mobile, et des informations d'aide à la sélection de réseau,
vérifier dans ladite indication incluse dans ledit premier message une cause dudit rejet d'accès dudit terminal mobile audit premier réseau mobile,
si ladite cause dudit rejet d'accès dudit terminal mobile audit premier réseau mobile indique que ledit terminal mobile n'est pas autorisé à accéder audit premier réseau mobile depuis un emplacement déterminé dudit terminal mobile, examiner (S53) la validité dudit premier message, dans lequel l'examen de ladite validité dudit premier message comprend le fait de détecter si l'intégrité dudit premier message est protégée,
si l'intégrité dudit premier message n'est pas protégée, considérer ledit premier message comme étant non valide et ignorer ledit premier message, et
si intégrité dudit premier message est protégée, considérer ledit premier message comme étant valide et affecter (S54) une sélection d'un deuxième réseau mobile auquel accéder sur la base des informations d'aide à la sélection de réseau incluses dans ledit premier message.

2. Procédé selon la revendication 1, comprenant en outre les étapes suivantes
envoyer un deuxième message comportant des informations impliquant un emplacement actuel dudit terminal mobile et/ou une indication précisant si ledit terminal mobile prend en charge la sélection de réseau mobile sur la base d'informations d'aide à la sélection de réseau fournies par une entité de fonction de gestion d'accès et de mobilité, dans lequel
ledit premier message est une réponse audit deuxième message.

3. Procédé selon la revendication 1, dans lequel
ledit premier message est un message de rejet d'inscription, un message de rejet de service ou un message de demande de désinscription.

4. Procédé selon la revendication 2, dans lequel
ledit premier message est un message de rejet d'inscription et ledit deuxième message est un message de demande d'inscription, ou ledit premier message est un message de rejet de service et ledit deuxième message est un message de demande de service.

5. Procédé selon la revendication 2 ou 4, dans lequel ledit deuxième message comporte des informations impliquant un emplacement actuel dudit terminal mobile, et dans lequel lesdites informations impliquant un emplacement actuel dudit terminal mobile comportent au moins un parmi
des coordonnées de l'emplacement actuel du terminal mobile détectées en utilisant un système mondial de navigation par satellite, et
un identifiant de cellule d'une cellule radio à laquelle ledit terminal mobile est connecté, et
facultativement, dans lequel ledit deuxième message comporte une liste d'identifiants de réseaux mobiles reçus au voisinage dudit dispositif mobile.

6. Procédé selon l'une des revendications 1 à 5, dans lequel
lesdites informations d'aide à la sélection de réseau comprennent des informations sur des réseaux mobiles auxquels ledit terminal mobile n'est pas autorisé à accéder depuis ledit emplacement déterminé dudit terminal mobile, dans lequel
ladite affectation (s54) comprend
la dépriorisation, parmi des réseaux mobiles candidats, desdits réseaux mobiles auxquels ledit terminal mobile n'est pas autorisé à accéder depuis ledit emplacement déterminé dudit terminal mobile, et de préférence l'affichage de chacun desdits réseaux mobiles auxquels ledit terminal mobile n'est pas autorisé à accéder depuis ledit emplacement déterminé dudit terminal mobile qui est associé à une indication d'une interdiction d'accès dudit terminal mobile depuis ledit emplacement déterminé dudit terminal mobile ; et
la sélection dudit deuxième réseau mobile dans lesdits réseaux mobiles candidats.

7. Procédé selon l'une des revendications 1 à 5, dans lequel
lesdites informations d'aide à la sélection de réseau comprennent des informations sur des réseaux mobiles auxquels ledit terminal mobile est autorisé à accéder depuis ledit emplacement déterminé dudit terminal mobile, dans lequel
ladite affectation (s54) comprend
la priorisation, parmi des réseaux mobiles candidats, desdits réseaux mobiles auxquels ledit terminal mobile est autorisé à accéder depuis ledit emplacement déterminé dudit terminal mobile, et de préférence l'affichage de chacun desdits réseaux mobiles auxquels ledit terminal mobile n'est pas autorisé à accéder depuis ledit emplacement déterminé dudit terminal mobile qui est associé à une indication d'une autorisation d'accès dudit terminal mobile depuis ledit emplacement déterminé dudit terminal mobile, et
la sélection dudit deuxième réseau mobile dans lesdits réseaux mobiles candidats.

8. Procédé réalisé par une entité de fonction de gestion d'accès et de mobilité (30, 30'), le procédé comprenant les étapes suivantes
déterminer un emplacement d'un terminal mobile,
s'assurer que ledit terminal mobile est autorisé ou non à accéder à un premier réseau mobile depuis ledit emplacement dudit terminal mobile, et
si ledit terminal mobile n'est pas autorisé à accéder audit premier réseau mobile depuis ledit emplacement dudit terminal mobile, transmettre un premier message dont l'intégrité est protégée comprenant une cause de rejet d'accès dudit terminal mobile audit premier réseau mobile, et des informations d'aide à la sélection de réseau, dans lequel ladite cause dudit rejet d'accès dudit terminal mobile audit premier réseau mobile indique que ledit terminal mobile n'est pas autorisé à accéder audit premier réseau mobile depuis ledit emplacement dudit terminal mobile ; et dans lequel lesdites informations d'aide à la sélection de réseau servent de base à une sélection d'un deuxième réseau mobile auquel accéder par le terminal mobile.

9. Procédé selon la revendication 8, comprenant en outre les étapes suivantes
recevoir dudit terminal mobile, un deuxième message comportant des informations impliquant un emplacement actuel dudit terminal mobile, dans lequel
ledit premier message dont l'intégrité est protégée est une réponse audit deuxième message, et
déterminer ledit emplacement du terminal mobile sur la base desdites informations impliquant ledit emplacement actuel dudit terminal mobile.

10. Procédé selon la revendication 9, dans lequel lesdites informations impliquant un emplacement actuel dudit terminal mobile comportent au moins un parmi
des coordonnées de l'emplacement actuel du terminal mobile détectées par le terminal mobile en utilisant un système mondial de navigation par satellite, et
un identifiant de cellule d'une cellule radio à laquelle ledit terminal mobile est connecté, et
facultativement, dans lequel ledit deuxième message comporte en outre une liste d'identifiants de réseaux mobiles au voisinage dudit terminal mobile.

11. Procédé selon la revendication 9 ou 10, comprenant en outre les étapes suivantes
générer des informations d'aide à la sélection de réseau sur la base desdites informations impliquant un emplacement actuel dudit terminal mobile, et
inclure lesdites informations d'aide à la sélection dans ledit premier message dont l'intégrité est protégée.

12. Procédé selon la revendication 11, dans lequel
lesdites informations d'aide à la sélection de réseau comprennent des informations sur des réseaux mobiles auxquels ledit terminal mobile n'est pas autorisé à accéder depuis ledit emplacement déterminé dudit terminal mobile, ou
lesdites informations d'aide à la sélection de réseau comprennent des informations sur des réseaux mobiles auxquels ledit terminal mobile est autorisé à accéder depuis ledit emplacement déterminé dudit terminal mobile.

13. Procédé selon l'une des revendications 9 à 12, comprenant en outre les étapes suivantes
vérifier si ledit deuxième message comporte une indication selon laquelle ledit terminal mobile prend en charge la sélection de réseau mobile sur la base d'informations d'aide à la sélection de réseau fournies par ladite entité de fonction de gestion d'accès et de mobilité,
si ledit deuxième message comporte ladite indication selon laquelle ledit terminal mobile prend en charge la sélection de réseau mobile sur la base d'informations d'aide à la sélection de réseau fournies par une entité de fonction de gestion d'accès et de mobilité, inclure ladite cause dudit rejet d'accès dudit terminal mobile audit premier réseau mobile dans ledit premier message, dans lequel ladite cause dudit rejet d'accès dudit terminal mobile audit premier réseau mobile indique que ledit terminal mobile n'est pas autorisé à accéder audit premier réseau mobile depuis ledit emplacement déterminé dudit terminal mobile.

14. Terminal mobile (10') comprenant
au moins un processeur (171),
au moins une mémoire (172) comportant un code de programme informatique, et
au moins une interface (173) configurée pour la communication avec au moins une entité de fonction d'accès et de mobilité,
l'au moins un processeur (171), avec l'au moins une mémoire (172) et le code de programme informatique, étant configuré pour amener le terminal mobile (10') à effectuer le procédé selon l'une des revendications 1 à 7.

15. Entité de fonction de gestion d'accès et de mobilité (30'), l'entité de fonction d'accès et de mobilité comprenant
au moins un processeur (175),
au moins une mémoire (176) comportant un code de programme informatique, et
au moins une interface (177) configurée pour la communication avec au moins un autre appareil,
l'au moins un processeur (175), avec l'au moins une mémoire (175) et le code de programme informatique, étant configuré pour amener l'entité de fonction d'accès et de mobilité (30') à effectuer le procédé de l'une des revendications 8 à 13.
